# EUROPÄISCHE PATENTSCHRIFT

(11) **EP 2 594 416 B1**
(45) Veröffentlichungstag und Bekanntmachung des Hinweises auf die Patenterteilung: **14.01.2015**
(21) Anmeldenummer: 12186268.4
(22) Anmeldetag: 27.09.2012
(51) Int. Cl.: B60C 11/01, B60C 13/02

(54) **Laufstreifen-Schulterbereich**
Lateral tread band areas
Zone lateral de bande de roulement

(30) Priorität: 15.11.2011 DE 102011055344
(43) Veröffentlichungstag der Anmeldung: 22.05.2013
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- NL-A- 7 209 157
- NL-A- 7 410 077
- US-A- 4 282 915
- Ralf Bohle GmbH Otto-Hahn-Str. 1 51580 Reichshof GERMANY: "Energizer", www.schwalbe.de , 19. Oktober 2011 (2011-10-19), XP002692328, Gefunden im Internet: URL:http://www.schwalbe.de/gbl/en/produkte /tour_city/produkt/?ID_Produktgruppe=39&ID _Produkt=144 [gefunden am 2013-02-18]

## Beschreibung

### Fahrzeugluftreifen

Die Erfindung betrifft einen Laufstreifen eines Fahrzeugreifens - insbesondere eines Fahrzeugluftreifens - mit einem - insbesondere drehrichtungsgebundenen - Laufstreifenprofil, welches sich von einer axialen Position des Reifens außerhalb der Bodenaufstandsbreite T_{A} in der einen Reifenschulter bis zu einer axialen Position außerhalb der Bodenaufstandsbreite T_{A} in der anderen Reifenschulter erstreckt.

Fahrzeugluftreifen mit einem derartigen Laufstreifenprofil sind bekannt. Beim Befahren von trockenen oder leicht feuchten Straßen ist der im Bereich der Bodenaufstandsfläche ausgebildete Erstreckungsbereich des Laufstreifenprofils wesentlich. So werden zur Erzielung guter Trockengriffeigenschaften innerhalb der Bodenaufstandsfläche Rippenprofile oder Blockreihenprofile mit möglichst steifen Profilblockelementen mit möglichst großen Profilblockelementen ausgebildet. Zur Erzielung guter Nassgriffeigenschaften ist es wünschenswert möglichst viele zusätzliche Griffkanten innerhalb der Bodenaufstandsfläche auszubilden. Zur Erzielung guter Aquaplaningeigenschaften soll ausreichend Negativprofil bereitgestellt werden in Form von Umfangsrillen und breiten Querrillen zur Ableitung von Wasser aus dem Bereich der Bodenaufstandsfläche nach außen. Breite tiefe Querrillen reduzieren die Steifigkeit der Profilblockreihen, was sich wiederum negativ auf Handlingeigenschaften, aber auch auf den Rollwiderstand des Fahrzeugluftreifens auswirken kann. Zur Erzielung guter Fahreigenschaften auf Schnee und Matsch ist es darüber hinaus bekannt, eine Vielzahl von Feineinschnitten innerhalb der Bodenaufstandsfläche auszubilden, wodurch zum einen Griffkanten zum besseren Griff auf Schnee und Matsch, zum anderen Taschen zur Aufnahme von Schnee und somit zur Verbesserung der Schnee-Schneereibung ermöglicht werden kann. Eine Vielzahl derartiger Feineinschnitte kann jedoch wiederum die Steifigkeit der Profilrippen bzw. Profilblockelemente der Profilblockreihen reduzieren, was wiederum negativen Einfluss auf andere Fahreigenschaften, wie z.B. Traktionseigenschaften auf trockener Straße und auf Rollwiderstandseigenschaften mit sich bringen kann.

Daher werden Fahrzeugluftreifen üblicher Weise zur Erzielung eines jeweiligen Kompromisses aus den sich widersprechenden Anforderungen aus gewünschten Fahreigenschaften auf trockener und nasser Straße und eines bestimmten Rollwiderstandes und sonstiger zu erzielender Fahreigenschaften jeweils so optimiert eingestellt ausgebildet, dass die verschiedenen Eigenschaften zumindest nicht übermäßig reduziert werden. Gegebenenfalls wird bei solchen Fahrzeugreifen, bei denen bestimmte Eigenschaften besonders gut sein sollen durch zusätzliche Maßnahmen wiederum versucht, die Reduktionen der anderen zumindest zum Teil zu kompensieren.

Insbesondere bei Spike-Reifen, bei denen die Positionierung und die Funktion der Spikes zum sicheren Griff auf eisbedeckten Straßen ebenfalls berücksichtigt werden muss, sind besonders große breite tiefe Querrillen und Umfangsrillen innerhalb der Bodenaufstandsfläche nur begrenzt ohne negativen Einfluss auf die Steifigkeit des Profiles und hierdurch bedingte Einschränkungen des Spikegriffs möglich. In manchen Regionen ist dennoch gewünscht, solche Fahrzeugreifen auch in tiefem Schnee oder Matsch einzusetzen. Die bekannten Maßnahmen innerhalb der Bodenaufstandsbreite können jedoch zu ungewünschten Einschränkungen des Griffs auf eis- bzw. schnee- und matschfreier Straße führen.

Aus der US 4, 282, 915 ist ein Laufstreifenprofil eines Fahrzeugreifens bekannt, bei welchem im Schulterbereich des Reifens außerhalb der Bodenaufstandsauffläche eine über den gesamten Umfang des Fahrzeugluftreifens erstreckte zickzackförmige Umfangsrille ausgebildet ist.

Der Erfindung liegt die Aufgabe zugrunde, mit einfachen Mitteln ein Laufstreifenprofil eines Fahrzeugluftreifens mit zu schaffen, bei dem verbesserter Griff auf Matsch und Schnee ohne negativen Einfluss auf die Fahreigenschaften auf Matsch-und Schneefreier Straße ermöglicht wird.

Die Aufgabe wird erfindungsgemäß durch die Ausbildung eines Laufstreifens eines Fahrzeugreifens - insbesondere eines Fahrzeugluftreifens - mit einem - insbesondere drehrichtungsgebundenen - Laufstreifenprofil, welches sich von einer axialen Position des Reifens außerhalb der Bodenaufstandsbreite T_{A} in der einen Reifenschulter bis zu einer axialen Position außerhalb der Bodenaufstandsbreite T_{A} in der anderen Reifenschulter erstreckt, gemäß den Merkmalen von Anspruch 1 gelöst, bei dem im Laufstreifenprofil in zumindest einer Reifenschulter außerhalb der Bodenaufstandsbreite über den Umfang des Fahrzeugreifens verteilt in Umfangsrichtung U hintereinander angeordnete und in Umfangsrichtung U von einander beabstandete jeweils über einen Umfangsabschnitt erstreckte Rillen ausgebildet sind, die mit ihrer Haupterstreckungsrichtung unter Einschluss eines Winkels zur Umfangsrichtung geneigt ausgebildet sind, und bei dem erste dieser Rillen und zweite dieser Rillen in der Reifenoberfläche in Drehrichtung D des Reifens gesehen eine gegenläufige Neigungsorientierung aufweisen, wobei die ersten Rillen und die zweiten Rillen über den Umfang des Reifens hinweg in alternierender Reihenfolge angeordnet sind.

Durch diese Ausbildung ist es möglich, einen Fahrzeugreifen mit innerhalb der Bodenaufstandsfläche für guten Griff auf trockener und nasser, möglicherweise auch eisbedeckter Straße optimiertem Laufstreifenprofil bei gutem Rollwiderstand und guten Handlingeigenschaften auszubilden. Durch die Ausbildung der ersten und zweiten Rillen, welche sich jeweils über Umfangserstreckungsabschnitte erstrecken und dabei mit einer gegenläufigen Neigung ausgerichtet sind, kann ermöglicht werden, dass dieser Reifen, sobald er auf matsch- oder schneebedeckte Straßenoberflächen fährt, mit Hilfe dieser ersten und zweiten alternierend angeordneten und mit gegenläufiger Neigung ausgebildeten Rillen zusätzlichen Griff außerhalb der Bodenaufstandsfläche erhält. Die Rillen erzeugen dabei zusätzliche Griffkanten, sowohl in Umfangs- als auch in axialer Richtung sowohl zur Erzielung verbesserter Traktion als auch zur Erzielung besseren Seitengriffs. Die alternierende Abfolge der unterschiedlich geneigten Rillen bewirkt einen Griff in beide axiale Richtungen bei zusätzlicher Aufnahme von Matsch und Schnee in das Negativvolumen der Rillen. Die Neigung der Rillen ermöglicht in Verbindung mit dem erhöhten Aufnahmevolumen über die mit den durch die Kanten der Rillen gebildeten Griffkanten hinaus einen zusätzlichen Schnee-Schneegriff bzw. Matsch-Matschgriff.

Besonders vorteilhaft ist die Ausbildung eines Laufstreifens eines Fahrzeugreifens mit einem drehrichtungsgebundenen Laufstreifenprofil gemäß den Merkmalen von Anspruch 2, bei dem die Rillen längs ihrer Erstreckung in Drehrichtung D mit einer stetig - insbesondere kontinuierlich - abnehmenden Breite ausgebildet sind, wobei die Breite in der Reifenoberfläche gemessenen wird. Hierdurch wird eine zusätzliche Verdichtung des aufgenommenen Schnees oder Matschs in Drehrichtung und weiter verbesserter Griff ohne Einfluss auf andere Reifeneigenschaften und Fahreigenschaften ermöglicht. Schnee und Matsch verbleiben länger in den Rillen, wodurch höhere Schnee-Schnee-Reibung bzw. Matsch-Matsch-Reibung und somit besserer Griff ermöglicht wird. Hierdurch wird zusätzlich die Traktion verbessert.

Besonders vorteilhaft ist die Ausbildung eines Laufstreifens eines Fahrzeugreifens mit einem drehrichtungsgebundenen Laufstreifenprofil gemäß den Merkmalen von Anspruch 3, wobei die ersten Rillen mit ihrem in Drehrichtung D vorgeordneten Ende in einer in der Reifenschulter ausgebildeten Querrille münden und sich ausgehend von dieser Querrille in Drehrichtung D bis zu ihrem anderen Ende erstrecken, und wobei insbesondere die ersten Rillen in Drehrichtung D gesehen mit einer von der Bodenaufstandsfläche wegweisende Neigungsorientierung ausgebildet sind. Hierdurch kann die Wirkungslänge von Griffkanten in Umfangs- und in Querrichtung optimiert werden.

Besonders vorteilhaft ist die Ausbildung eines Laufstreifens eines Fahrzeugreifens mit einem drehrichtungsgebundenen Laufstreifenprofil gemäß den Merkmalen von Anspruch 4, wobei die zweiten Rillen mit ihrem in Drehrichtung D vorgeordneten Ende in einer in der Reifenschulter ausgebildeten Umfangsrille münden und sich ausgehend von dieser Umfangsrille in Drehrichtung D bis zu ihrem anderen Ende erstrecken, und wobei insbesondere die zweiten Rillen in Drehrichtung D gesehen mit einer zur der Bodenaufstandsfläche hinweisenden Neigungsorientierung ausgebildet sind. Hierdurch kann die Wirkungslänge von Griffkanten in Umfangs- und in Querrichtung optimiert werden.

Besonders vorteilhaft ist die Ausbildung eines Laufstreifens gemäß den Merkmalen von Anspruch 5, wobei der Fahrzeugreifen ein Spikereifen ist. Hierdurch kann gerade in Regionen in besonders rauem, kaltem Klima und schlechten Straßenverhältnissen mit viel Eis, Matsch und Schnee eine optimale Griffwirkung erzielt werden.

Besonders vorteilhaft ist die Ausbildung eines Laufstreifens gemäß den Merkmalen von Anspruch 6, wobei der Fahrzeugreifen ein OFF-Roadreifen ist. Hierdurch kann besonders auf nicht befestigten Straßen mit tiefen Untergründen eine optimale Griffwirkung erzielt werden.

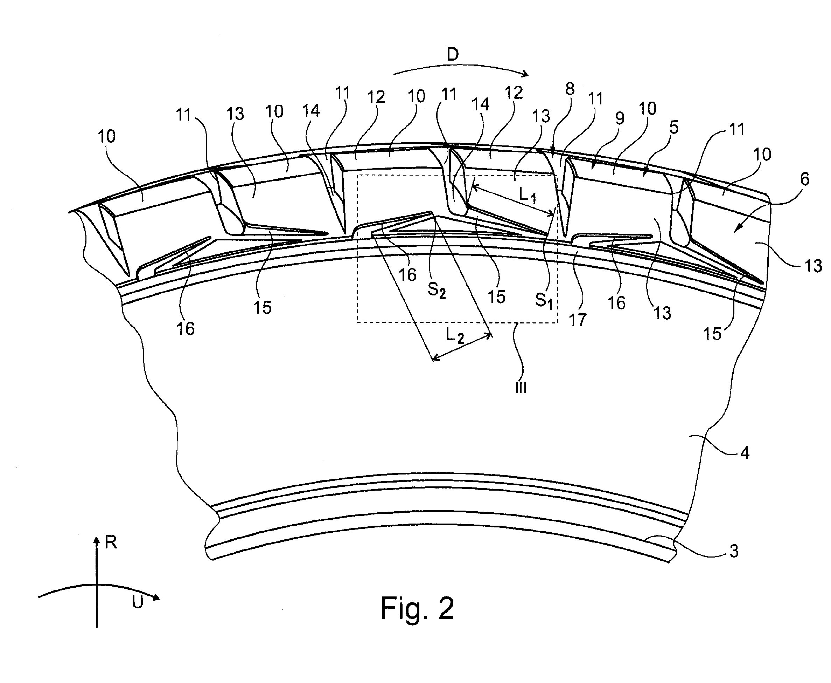

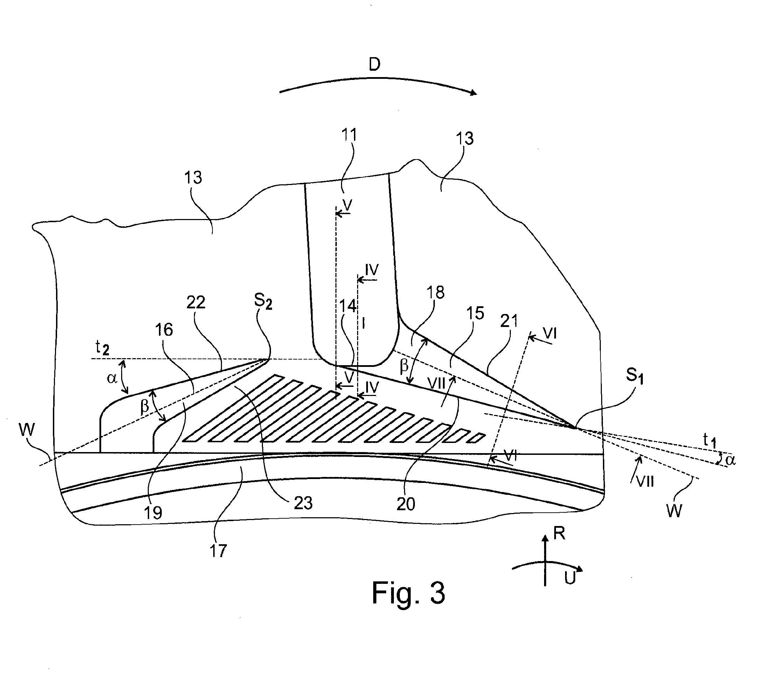

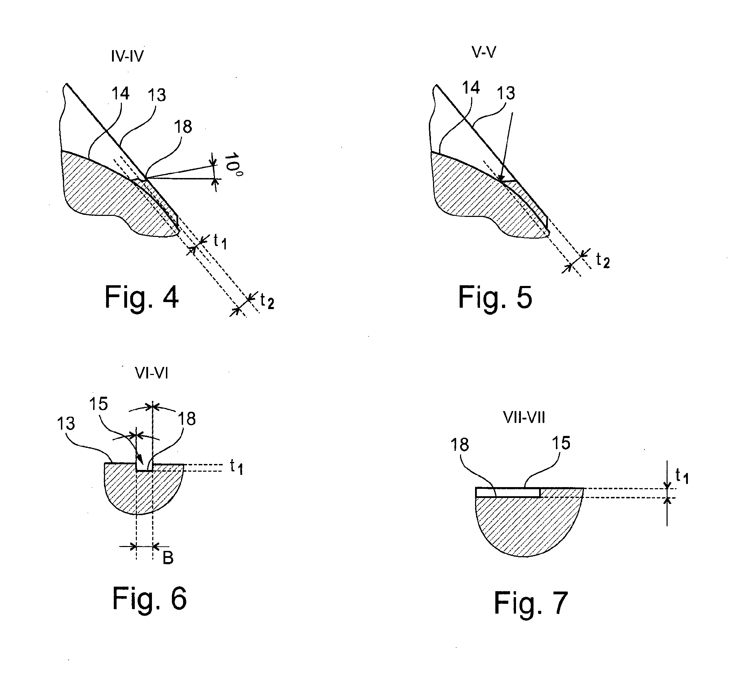

Die Erfindung wird im Folgenden an Hand der in den Figuren 1 bis 7 dargestellten Ausführungsbeispiele eines drehrichtungsgebundenen Fahrzeugluftreifens näher erläutert. Hierin zeigen
- Fig. 1: eine Querschnittsdarstellung eines drehrichtungsgebundenen Fahrzeugreifens für Personenkraftwagen,
- Fig. 2: Umfangsabschnitt des Fahrzeugreifens von Fig. 1 in Seitenansicht,
- Fig. 3: Detailansicht des Details III von Fig.2,
- Fig. 4: Laufstreifenprofil von Fig. 2 in Querschnittdarstellung gemäß Schnitt IV-IV von Fig. 3,
- Fig. 5: Laufstreifenprofil von Fig. 2 in Querschnittdarstellung gemäß Schnitt V-V von Fig. 3,
- Fig. 6: Laufstreifenprofil von Fig. 2 in Querschnittdarstellung gemäß Schnitt VI-VI von Fig. 3 und
- Fig. 7: Laufstreifenprofil von Fig. 2 in Querschnittdarstellung gemäß Schnitt VII-VII von Fig. 3.

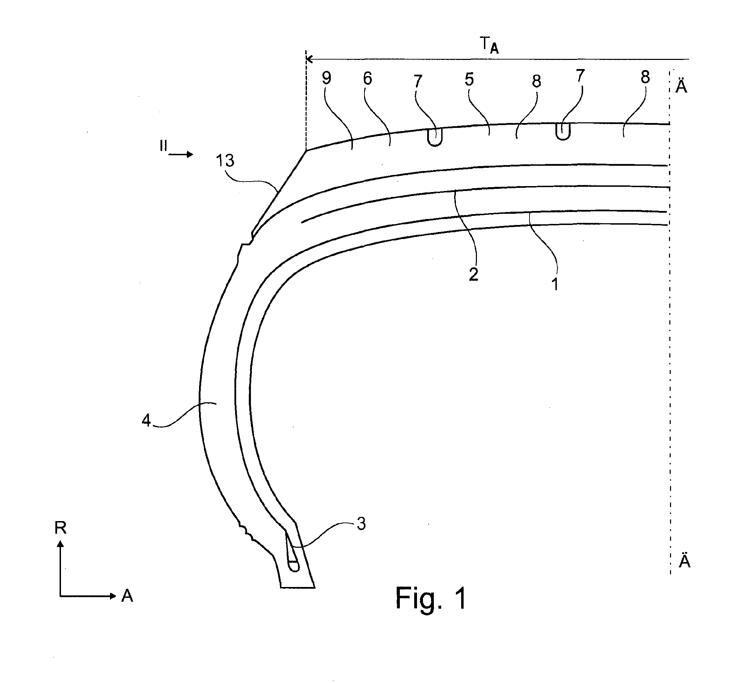

Die Figuren zeigen einen Fahrzeugluftreifen radialer Bauart für Personenkraftwagen (PKW). In Fig. 1 ist dabei aus Symmetriegründen lediglich die eine Hälfte des Fahrzeugluftreifens dargestellt, welche sich ausgehend von der die Symmetrieebene bildenden Äquatorebene Ä-Ä des Fahrzeugluftreifens in axialer Richtung A nach außen erstreckt. Der Fahrzeugluftreifen ist in herkömmlicher Weise mit einer Karkasse 1 radialer Bauart, einem radial oberhalb der Karkasse 1 ausgebildeten Gürtel 2 und mit zwei Reifenwülsten, in welchen jeweils ein Reifenwulstkern 3 angeordnet ist, ausgebildet. An der axialen Außenseite ist der Fahrzeugluftreifen jeweils mit einem aus einem Reifenseitenwandgummi ausgebildeten Reifenseitenwandstreifen 4 begrenzt, welcher sich jeweils in Umfangsrichtung U des Fahrzeugluftreifens über den gesamten Umfang des Fahrzeugluftreifens und in radialer Richtung R ausgehend vom Reifenwulst nach außen erstreckt. Radial außerhalb des Gürtels 2 ist der Fahrzeugluftreifen mit einem in Umfangsrichtung U des Fahrzeugluftreifens über den gesamten Umfang des Fahrzeugluftreifens erstreckten und in axialer Richtung A von Reifenschulter zu Reifenschulter hin erstreckt ausgebildeten, profilierten Laufstreifen 5 begrenzt. Der Fahrzeugluftreifen ist in bekannter Weise als Spikereifen ausgebildet.

Der profilierte Laufstreifen 5 ist aus in Umfangsrichtung U über den gesamten Umfang des Fahrzeugluftreifens erstreckten und in axialer Richtung A nebeneinander angeordneten Profilblockreihen 8 und im Bereich der Reifenschultern jeweils aus einer in Umfangsrichtung U über den gesamten Umfang des Fahrzeugluftreifens erstreckten Schulterprofilblockreihe 9 ausgebildet. Die in axialer Richtung A benachbarten Profilblockreihen 8 sind jeweils durch eine in Umfangsrichtung U des Fahrzeugluftreifens ausgerichtete und über den gesamten Umfang erstreckte Umfangsrille 7 voneinander beabstandet. Die Schulterprofilblockreihe 9 ist in axialer Richtung A von der zur Äquatorebene Ä-Ä hin benachbarten Profilblockreihe 8 durch eine in Umfangsrichtung U des Fahrzeugluftreifens ausgerichtete und über den gesamten Umfang erstreckte Umfangsrille 7 beabstandet. Die Profilblockreihen 8 sind in Umfangsrichtung U aus hintereinander angeordneten, jeweils durch Querrillen voneinander beabstandeten Profilblockelementen bekannter Art ausgebildet. Die Schulterprofilblockreihe 9 ist in Umfangsrichtung U aus einer Vielzahl von in Umfangsrichtung U hintereinander angeordneten und jeweils durch Querrillen 11 voneinander beabstandeten Profilblockelementen 10 ausgebildet. Die Profilblockelemente der Profilblockreihen 8 sowie die Profilblockelemente 10 der Schulterprofilblockreihe 9 sind in radialer Richtung R nach außen jeweils durch eine radial äußere Oberfläche 12 begrenzt, welche innerhalb der axialen Erstreckung der axialen Breite T_{A} der Bodenaufstandsfläche , d.h. innerhalb der Bodenaufstandsbreite T_{A}, im montierten Zustand des Fahrzeugluftreifens am Fahrzeug unter Last unter Normbedingungen die Bodenkontaktfläche des Laufstreifenprofiles darstellt.

Die Schulterprofilblockreihe 9 und die Profilblockelemente 10 der Schulterprofilblockreihe 9 sind in der axialen von der Äquatorebene Ä-Ä und vom Reifen wegweisenden Richtung A von einer Flanke 13 begrenzt, welche sich in radialer Richtung R nach innen bis zum Reifenseitenwandstreifen 4 erstreckt. Bei dem dargestellten Spikereifen erstreckt sich die Bodenaufstandsbreite T_{A} bis zur Schnittkante der Flanke 13 mit der die Profilblockelemente 10 der Schulterprofilblockreihe 9 nach radial außen begrenzenden Oberfläche 12.

In der axial außerhalb der Bodenaufstandsbreite T_{A} ausgebildeten Flanke 13 des Laufstreifenprofils ist im Abstand zu den Querrillen 11 der Schulterprofilblockreihe 9 eine über den gesamten Umfang des Fahrzeugluftreifens erstreckte Umfangsrille 17 ausgebildet. Zwischen der Umfangsrille 17 und der Position der Querrillen 11 sind in der Flanke 13 in Umfangsrichtung U des Fahrzeugluftreifens hintereinander erste in Umfangsrichtung U erstreckte Rillen 15 und zweite in Umfangsrichtung U erstreckte Rillen 16 in alternierender Reihenfolge angeordnet. Benachbarte Rillen 15 und Rillen 16 erstrecken sich in Umfangsrichtung U hintereinander beabstandet zueinander jeweils über einen Umfangssegmentabschnitt des Reifenumfangs. Bei dem drehrichtungsgebundenen Laufstreifenprofil sind die Rillen 15 und die Rillen 16 dabei jeweils längs ihrer Erstreckung in Drehrichtung D bei Vorwärtsfahrt mit kontinuierlich abnehmender, in der Reifenoberfläche senkrecht zur Erstreckungsrichtung der jeweiligen Rille 15 bzw. 16 gemessener Breite B ausgebildet.

Die Rille 15 wird dabei in der zur Äquatorebene Ä-Ä hinweisenden Richtung von einer Flanke 21 und in der von der Äquatorebene Ä-Ä und vom Reifen wegweisenden Richtung von einer Flanke 20 begrenzt. Die Rille 16 wird in der zur Äquatorebene Ä-Ä hinweisenden Richtung von einer Flanke 22 und in der von der Äquatorebene Ä-Ä und vom Reifen wegweisenden Richtung von einer Flanke 23 begrenzt. Die Flanken 21 und 22 der Rille 15 sind jeweils geradlinig ausgebildet und schneiden sich in einem Schnittpunkt S₁ in der Reifenoberfläche und schließen in Schnittpunkt S₁ einen Winkel β miteinander ein. Die Flanke 20 ist im Schnittpunkt S₁ unter einem Neigungswinkel α zu der im Schnittpunkt S₁ an die Umfangsrichtung U des Fahrzeugluftreifens gebildeten Tangente t₁ geneigt ausgerichtet. Die Flanken 22 und 23 der Rille 16 schneiden sich in einem Schnittpunkt S₂ in der Reifenoberfläche und schließen dabei im Schnittpunkt S₂ ebenfalls einen Winkel β miteinander ein. Die Flanke 22 ist im Schnittpunkt S₂ unter einem Neigungswinkel α zu der im Schnittpunkt S₂ an die Umfangsrichtung U gebildeten Tangente t₂ geneigt ausgerichtet. Dabei ist der Neigungswinkel α, den die Flanke 20 im Schnittpunkt S₁ mit der Tangente t₁ einschließt, von der Tangente t₁ ausgehend in Reifendrehrichtung D gesehen mit von der Äquatorebenen Ä-Ä wegweisender Orientierung gemessen. Der Neigungswinkel α, den die Flanke 22 im Schnittpunkt S₂ mit der Tangente t₂ einschließt, ist von der Tangente t₂ ausgehend in Drehrichtung D des Fahrzeugluftreifens gesehenen mit einer Orientierung zur Äquatorebene Ä-Ä hin gemessen. Die Neigungsrichtung α der Flanken 22 und 20 und somit der Neigungsverlauf Rillen 16 und 15 ist somit längs ihrer Erstreckung in Drehrichtung D gegenläufig zueinander orientiert gewählt.

Die Breite B wird bei der Rille 15 senkrecht zu den zu den Flanken 20 und 21 durch den Schnittpunkt S₁ gebildeten Winkelhalbierenden w bemessen. Die Breite B wird bei den Rillen 16 jeweils senkrecht zu den Flanken 22 und 23 durch den Schnittpunkt S₂ gebildeten Winkelhalbierenden w bemessen.

Die Rille 15 erstreckt sich ausgehend vom Schnittpunkt S₁ in Gegendrehrichtung hin mit konstant zunehmender Breite B und mündet in den Endabschnitt der Querrille 11.

Die Rille 15 ist dabei längs ihrer Erstreckung mit einer zur umgebenen Reifenoberfläche gemessenen konstanten Tiefe t₁ ausgebildet, welche kleiner ist als die Tiefe t₂ der Querrille 11 im Mündungsbereich der Rille 15 in die Querrille 11. Die Tiefe t₁ erstreckt sich dabei ausgehend von der die Mantelfläche bildenden Oberfläche des Reifens in senkrechter Richtung zu der Mantelfläche bis zu dem die Rille 15 nach innen begrenzenden Rillengrund 18. Die Rille 15 erstreckt sich dabei ausgehend vom Schnittpunkt S₁ bis zur Querrille 11 über eine Erstreckungslänge L₁, welche die Erstreckungslänge der Flanke 21 bildet.

Die Rille 16 erstreckt sich ausgehend vom Schnittpunkt S₂ in Gegendrehrichtung hin mit einer konstant zunehmenden Breite B über eine Erstreckungslänge L₂, welche die Erstreckungslänge der Flanke 23 darstellt und knickt dann in axialer Richtung zur Umfangsrille 17 hin ab und mündet in die Umfangsrille 17. Die Rille 16 ist senkrecht zu der die umgebende Oberfläche des Reifens bildenden Mantelfläche nach innen hin von einem Rillengrund 19 begrenzt und mit einer Tiefe ausgebildet, welche kleiner ist als die Tiefe t₂. Die Öffnungswinkel β sind mit 3° ≤ β ≤ 20° ausgebildet.

Der Neigungswinkel α ist mit 0° ≤ α < (90° - β) ausgebildet. Im gewählten Ausführungsbeispiel ist α mit 3° ≤ α ≤ 20° gewählt.

Beispielsweise ist β = 14° und α = 12° gewählt.

Die Längen L₁ und L₂ sind im Erstreckungsbereich mindestens 20mm und maximal 50mm gewählt ausgebildet.

In einer nicht dargestellten Ausführungsform sind die Winkel α und β pitchlängenabhängig. Beispielsweise sind bei Verwendung von mittleren, langen und kurzen Pitchlängen im Profil in den erstreckungsabschnitten mittlerer Pitchlängen β = 14° und α = 12° gewählt, in den Abschnitten längerer Pitchlängen sind β <14° und α < 12° gewählt und in den Abschnitten kürzerer Pitchlängen sind β > 14° und α > 12° gewählt. Die Längen L₁ und L₂ sind in dieser Ausführung ebenfalls pitchlängenabhängig jedoch mindestens 20mm und maximal 50mm gewählt ausgebildet.

Die Tiefe t₁ ist mit 1mm ≤ t₁ ≤ 2mm ausgebildet. Beispielsweise ist t₁ = 1,5mm und t₂ = 2,5mm gewählt.

Im gezeigten Ausführungsbeispiel eines Spikereifens sind die Rillen 15 und 16 sowie die Umfangsrille 17 in dem die Flanke 13 bildenden Erstreckungsabschnitt der Schulterprofilblockreihe 9 ausgebildet.

In anderen - nicht dargestellten - Ausführungsbeispielen, beispielsweise bei spikelosen Winterreifen, bei welchen die Schulterprofilblockreihen mit ihren die Schulterprofilblockelemente nach radial außen hin begrenzenden Oberflächen 12 sich in axialer Richtung A bis in eine Position außerhalb der Bodenaufstandsbreite T_{A} hin erstrecken, sind derartige Rillen 15 und 16 und die Umfangsrille 17 außerhalb der Bodenaufstandsbreite T_{A} in analoger Weise in der radial äußeren Oberfläche 12 der Profilblockelemente 10 der Schulterprofilblockreihe 9 außerhalb der Bodenaufstandsbreite T_{A} ausgebildet.

Auch wenn die Erfindung im Zusammenhang mit Spikereifen dargestellt und deren Anwendung auch bei üblichen Winterreifen erläutert wurde, ist in analoger der Einsatz auch in Ausführungsbeispielen bei OFF-Road-Reifen zur Verbesserung des Griffes im Matsch und Schlamm Weise sinnvoll.

### Bezugszeichenliste

### (Teil der Beschreibung)

- 1: Karkasse
- 2: Gürtel
- 3: Wulstkern
- 4: Seitenwand
- 5: Laufstreifen
- 6: Reifenschulter
- 7: Umfangsrille
- 8: Profilblockreihe
- 9: Schulterprofilblockreihe
- 10: Profilblockelement
- 11: Querrille
- 12: Radial äußere Oberfläche
- 13: Flanke
- 14: Rillengrund
- 15: Rille
- 16: Rille
- 17: Umfangsrille
- 18: Rillengrund
- 19: Rillengrund
- 20: Flanke
- 21: Flanke
- 22: Flanke
- 23: Flanke

## Patentansprüche

1. Laufstreifen eines Fahrzeugreifens - insbesondere eines Fahrzeugluftreifens - mit einem - insbesondere drehrichtungsgebundenen - Laufstreifenprofil, welches sich von einer axialen Position des Reifens außerhalb der Bodenaufstandsbreite T_{A} in der einen Reifenschulter (6) bis zu einer axialen Position außerhalb der Bodenaufstandsbreite T_{A} in der anderen Reifenschulter erstreckt,
**dadurch gekennzeichnet,**
**dass** im Laufstreifenprofil in zumindest einer Reifenschulter (6) außerhalb der Bodenaufstandsbreite T_{A} über den Umfang des Fahrzeugreifens verteilt in Umfangsrichtung U hintereinander angeordnete und in Umfangsrichtung U von einander beabstandete jeweils über einen Umfangsabschnitt erstreckte Rillen (15,16) ausgebildet sind, die mit ihrer Haupterstreckungsrichtung unter Einschluss eines Winkels zur Umfangsrichtung U geneigt ausgebildet sind, und
**dass** erste (15) dieser Rillen und zweite (16) dieser Rillen in der Reifenoberfläche in Drehrichtung D des Reifens gesehen eine gegenläufige Neigungsorientierung aufweisen, wobei die ersten Rillen (15) und die zweiten Rillen (16) über den Umfang des Reifens hinweg in alternierender Reihenfolge angeordnet sind.

2. Laufstreifen eines Fahrzeugreifens mit einem drehrichtungsgebundenen Laufstreifenprofil gemäß den Merkmalen von Anspruch 1,
wobei die Rillen (15,16) längs ihrer Erstreckung in Drehrichtung D mit einer stetig - insbesondere kontinuierlich - abnehmenden Breite B ausgebildet sind, wobei die Breite B in der Reifenoberfläche gemessenen wird.

3. Laufstreifen eines Fahrzeugreifens mit einem drehrichtungsgebundenen Laufstreifenprofil gemäß den Merkmalen von Anspruch 2,
wobei die ersten Rillen (15) mit ihrem in Drehrichtung D vorgeordneten Ende in einer in der Reifenschulter (6) ausgebildeten Querrille (11) münden und sich ausgehend von dieser Querrille (11) in Drehrichtung D bis zu ihrem anderen Ende S₁ erstrecken, und
wobei insbesondere die ersten Rillen (15) in Drehrichtung D gesehen mit einer von der Bodenaufstandsfläche wegweisende Neigungsorientierung ausgebildet sind.

4. Laufstreifen eines Fahrzeugreifens mit einem drehrichtungsgebundenen Laufstreifenprofil gemäß den Merkmalen von Anspruch 2 oder 3,
wobei die zweiten Rillen (16) mit ihrem in Drehrichtung D vorgeordneten Ende in einer in der Reifenschulter (6) ausgebildeten Umfangsrille (17) münden und sich ausgehend von dieser Umfangsrille (17) in Drehrichtung D bis zu ihrem anderen Ende S₂ erstrecken, und
wobei insbesondere die zweiten Rillen (16) in Drehrichtung D gesehen mit einer zur der Bodenaufstandsfläche hinweisenden Neigungsorientierung ausgebildet sind.

5. Laufstreifen eines Fahrzeugreifens gemäß den Merkmalen von einem oder mehreren der vorangegangenen Ansprüche,
wobei der Fahrzeugreifen ein Spikereifen ist.

6. Laufstreifen eines Fahrzeugreifens gemäß den Merkmalen von einem oder mehreren der vorangegangenen Ansprüche,
wobei der Fahrzeugreifen ein OFF-Roadreifen ist.

## Claims

1. Tread band of a vehicle tyre - in particular a pneumatic vehicle tyre - with a tread band profile - in particular a tread band profile dependent on the direction of rotation - which extends from an axial position of the tyre outside the ground contact width T_{A} in the one tyre shoulder (6) up to an axial position outside the ground contact width T_{A} in the other tyre shoulder,
**characterized**
**in that** grooves (15, 16), which are arranged one behind the other in the circumferential direction U, are formed in the tread band profile in at least one tyre shoulder (6) outside the ground contact width T_{A}, distributed over the circumference of the vehicle tyre, and made to extend respectively over a portion of the circumference while spaced apart from one another in the circumferential direction U, and are formed with a main direction of extent inclined to form an angle with the circumferential direction U, and
**in that** first grooves (15) of these grooves and second grooves (16) of these grooves have, seen in the direction of rotation D of the tyre, an opposing orientation of inclination in the tyre surface, the first grooves (15) and the second grooves (16) being arranged in alternating sequence over the circumference of the tyre.

2. Tread band of a vehicle tyre with a tread band profile dependent on the direction of rotation according to the features of Claim 1,
the grooves (15, 16) being formed with a steadily - in particular continuously - decreasing width B along their extent in the direction of rotation D, the width B being measured in the tyre surface.

3. Tread band of a vehicle tyre with a tread band profile dependent on the direction of rotation according to the features of Claim 2,
the first grooves (15) opening out with their end arranged first in the direction of rotation D into a transverse groove (11) formed in the tyre shoulder (6) and extending from this transverse groove (11) in the direction of rotation D up to their other end S₁, and
in particular the first grooves (15) being formed, as seen in the direction of rotation D, with an orientation of inclination directed away from the ground contact surface.

4. Tread band of a vehicle tyre with a tread band profile dependent on the direction of rotation according to the features of Claim 2 or 3,
the second grooves (16) opening out with their end arranged first in the direction of rotation D into a circumferential groove (17) formed in the tyre shoulder (6) and extending from this circumferential groove (17) in the direction of rotation D up to their other end S₂, and
in particular the second grooves (16) being formed, as seen in the direction of rotation D, with an orientation of inclination directed towards the ground contact surface.

5. Tread band of a vehicle tyre according to the features of one or more of the preceding claims,
the vehicle tyre being a spiked tyre.

6. Tread band of a vehicle tyre according to the features of one or more of the preceding claims, the vehicle tyre being an OFF-road tyre.

## Revendications

1. Bande de roulement pour bandage de roue de véhicule, en particulier pour bandage pneumatique de roue de véhicule, présentant un profil de bande de roulement dépendant en particulier du sens de rotation et s'étendant depuis une position axiale du bandage de roue située à l'extérieur de la largeur T_{A} d'appui au sol dans un des épaulements (6) du bandage de roue jusqu'à une position axiale située à l'extérieur de la largeur T_{A} d'appui au sol dans l'autre épaulement du bandage de roue,
**caractérisée en ce que**
dans le profil de la bande de roulement, des rainures (15, 16), réparties sur la périphérie du bandage pour roue de véhicule, disposées les unes derrière les autres dans la direction périphérique U, écartées les unes des autres dans la direction périphérique U s'étendent sur une partie de la périphérie dans au moins un épaulement (6) du bandage de roue à l' extérieur de la largeur T_{A} d'appui au sol, ces rainures étant formées sous une inclinaison de leur direction d'extension principale formant un angle par rapport à la direction périphérique U et
**en ce que** des premières (15) de ces rainures et des deuxièmes (16) de ces rainures présentent dans la surface du bandage de roue, dans le sens de rotation D du bandage de roue une orientation opposée de l'inclinaison, les premières rainures (15) et les deuxièmes rainures (16) étant disposées en succession alternée sur la périphérie du bandage de roue.

2. Bande de roulement pour bandage de roue de véhicule présentant un profil de bande de roulement dépendant du sens de rotation selon les caractéristiques de la revendication 1, dans laquelle les rainures (15, 16) sont formées le long de leur extension dans le sens de rotation D avec une largeur B qui diminue de manière constante et en particulier de manière continue, la largeur B étant mesurée dans la surface du bandage de roue.

3. Bande de roulement pour bandage de roue de véhicule, présentant un profil de bande de roulement dépendant du sens de rotation selon les caractéristiques de la revendication 2, dans laquelle les premières rainures (15) débouchent par leur extrémité située en avant dans le sens de rotation D dans une rainure transversale (11) formée dans l'épaulement (6) du bandage de roue et, partant de cette rainure transversale (11), s'étendent dans le sens de rotation D jusqu'à leur autre extrémité S₁, les premières rainures (15) étant en particulier formées dans le sens de rotation D avec une orientation de leur inclinaison qui s'écarte de la surface d'appui au sol.

4. Bande de roulement pour bandage de roue de véhicule, présentant un profil de bande de roulement dépendant du sens de rotation selon les caractéristiques des revendications 2 ou 3, dans laquelle les deuxièmes rainures (16) débouchent par leur extrémité située en avant dans le sens de rotation D dans une rainure périphérique (17) formée dans l'épaulement (6) du bandage de roue et, partant de cette rainure périphérique (17), s'étendent dans le sens de rotation D jusqu'à leur autre extrémité S₂, les deuxièmes rainures (16) étant configurées dans le sens de rotation D avec une orientation de leur inclinaison qui pointe vers la surface d'appui au sol.

5. Bande de roulement pour bandage de roue de véhicule selon les caractéristiques d'une ou plusieurs des revendications précédentes, dans laquelle le bandage pour roue de véhicule est un bandage à clous.

6. Bande de roulement pour bandage de roue de véhicule selon les caractéristiques d'une ou plusieurs des revendications précédentes, dans laquelle le bandage pour roue de véhicule est un bandage de roue tout terrain.
